# EUROPEAN PATENT SPECIFICATION

(11) **EP 4 048 738 B1**
(45) Date of publication and mention of the grant of the patent: **12.07.2023**
(21) Application number: 20807905.3
(22) Date of filing: 23.10.2020
(51) Int. Cl.: C09C 1/56, C09C 1/48

(54) **ECOLOGICAL PURIFICATION AND REACTIVATION PROCESS OF CARBON BLACK OBTAINED FROM THE PYROLYSIS OF USED TYRES**
VERFAHREN ZUR ÖKOLOGISCHEN REINIGUNG UND REAKTIVIERUNG VON AUS DER PYROLYSE VON ALTREIFEN GEWONNENEM RUSS
PROCÉDÉ ÉCOLOGIQUE DE PURIFICATION ET DE RÉACTIVATION DE NOIR DE CARBONE OBTENU À PARTIR DE LA PYROLYSE DE PNEUS USÉS

(30) Priority: 23.10.2019 IT 201900019595
(43) Date of publication of application: 31.08.2022
(73) Proprietor: T.E.C. S.r.l., 20122 Milano (IT)
(72) Inventor: CATALDO, Franco, 00133 ROMA (IT); PRIORI, Angelo, 67100 L AQUILA (IT)
(74) Representative: Santi, Filippo
(86) International application number: PCT/IT2020/050257
(87) International publication number: WO 2021/079395

(56) References cited:
- US-A- 4 264 568
- US-A1- 2004 047 779
- J. PISKORZ ET AL: "Recovery of Carbon Black from Scrap Rubber", ENERGY & FUELS, vol. 13, no. 3, 1 May 1999 (1999-05-01), pages 544-551, XP055717980, WASHINGTON, DC, US. ISSN: 0887-0624, DOI: 10.1021/ef980054i
- MARTÍNEZ JUAN DANIEL ET AL: "Carbon black recovery from waste tire pyrolysis by demineralization: Production and application in rubber compounding", WASTE MANAGEMENT, vol. 85, 24 January 2019 (2019-01-24), pages 574-584, XP085607806, ISSN: 0956-053X, DOI: 10.1016/J.WASMAN.2019.01.016
- ASOKAN VIJAYSHANKAR ET AL: "Characterization of carbon black modified by maleic acid", FRONTIERS OF MATERIALS SCIENCE, HIGHER EDUCATION PRESS, HEIDELBERG, vol. 7, no. 3, 16 August 2013 (2013-08-16) , pages 302-307, XP035339164, ISSN: 2095-025X, DOI: 10.1007/S11706-013-0217-5 [retrieved on 2013-08-16]
- POH ET AL: "Citric acid functionalized carbon materials for fuel cell applications", JOURNAL OF POWER SOURCES, ELSEVIER SA, CH, vol. 176, no. 1, 23 October 2007 (2007-10-23), pages 70-75, XP022397011, ISSN: 0378-7753, DOI: 10.1016/J.JPOWSOUR.2007.10.049

## Description

The present invention relates to an ecological purification and reactivation process of the carbon black obtained from the pyrolysis of used tyres.

In particular, the present invention relates to a purification process of the carbon black obtained from the pyrolysis of used tyres by means of solvent extraction characterized by low or zero toxicity and environmental impact, preferably - but not exclusively - derived from raw materials from renewable and non-fossil sources, i.e., by means of heat treatment in an inert atmosphere followed by solvent extraction, in order to remove the residues of pyrolysed rubber deposited on the surface of the carbon black obtained from the pyrolysis and the polycyclic aromatic hydrocarbons contained therein.

The present invention also relates to a process for the extraction of zinc from the carbon black obtained from the pyrolysis previously purified by means of solvent extraction or by heat treatment followed by solvent extraction, making use of carboxylic acids of natural origin, such as citric acid and tartaric acid obtained from completely renewable sources.

It is known that, among the various proposals for the recovery of used tyres, pyrolysis appears to be one of the best solutions, as it allows to implement the principles of circular economy, i.e., to recover and put the recovered materials back into circulation without emitting CO₂ in the atmosphere *[see* J.D. Martinez et al., Sustainable Energy Reviews, vol. 23, pp. 179-213, (2013*)].* In fact, the pyrolysis of used tyres could allow the reuse of certain fractions of pyrolysate in new rubber compounds *[see* F. Cataldo, (2006). Progress in Rubber, Plastics and Recycling Technology, vol. 22 , p. 147-164 and 243-252, (2006*)],* but above all it allows the recovery and reuse of pyrolytic carbon black (hereinafter abbreviated "CBp") in the preparation of new rubber compounds, both for technical items and for new tyres *[see F.* Cataldo, Macromolecular Materials & Engineering, vol. 290, p. 463-467, (2005*)].* The industrial production of CBp is already underway in various EU countries as well as non-EU countries, with limited use of CBp as a low-reinforcing "filler" in the rubber industry. In fact, the currently produced CBPs have a series of drawbacks which somewhat limit the potential diffusion thereof. First of all, the surface of the currently produced CBp is covered and inactivated by about 10-22% by weight of carbonized rubber, produced by the incomplete pyrolysis of the tyre rubber from which it derives, hereinafter in the present description identified as "bituminous residue or fraction", with the aggravating circumstance that this fraction of carbonized rubber also contains polycyclic aromatic hydrocarbons, hereinafter in the present description identified as "PAHs", some of which are known to be potentially carcinogenic *[see* F. Cataldo, Fullerenes Nanotubes Carbon Nanostructures, vol. 28, p. 368-376, (2020*)].* It should also be noted that the total PAHs content in rubber compounds is limited by stringent regulations, such as Regulation (EC) no. 1907/2006. The carbonized rubber, bituminous residue of the pyrolysis, deposited on the surface of the CBp, reduces the surface area thereof (a fundamental parameter of the reinforcing effect of carbon black in general and especially of CBp) and covers the active sites on the surface of the CBp, which, if they were free, would be the seat for the rubber-black interaction which would lead to a greater reinforcement effect if the CBp was reused as a "filler" in the manufacturing of new rubber compounds *[see* F. Cataldo, Carbon, vol. 40, p. 157-162, (2002*);* F. Cataldo, Polymer International, vol. 50, p. 828-834, (2001*)].* Furthermore, the presence of carbonized rubber on the surface of the CBp somewhat limits the processability thereof, preventing grinding after the production thereof. In other words, the carbonized rubber behaves like a bituminous resin which dries out any mills dedicated to grinding the CBp, a problem whose solution has been proposed in patents NL201588881 and WO2013/095145A1 by means of a controlled heat treatment in the presence of air in order to volatilize and burn the bituminous fraction. However, such treatment is not free from fire and explosion hazards, which indeed have occurred on an industrial plant scale. Piskorz et al. discloses washing mud which originates from pyrolyzed rubber scrap (from tires) with a volatile solvent such as acetone, naphtha or trichloroethylene, in "Recovery of Carbon Black from Scrap Rubber" published in Energy and Fuels 13, p.544-551 (1999). US2004/047779 discloses the purification of carbon black originating from scrap rubber tires using solvent extraction with the solvent being benzene, toluene or xylene.

A further drawback of the conventional CBps concerns the high content of a mineral fraction, obviously not present in the carbon blacks produced by combustion in the absence of oxygen of heavy oil and/or coal fractions by means of the process known as "furnace". This mineral fraction, sometimes referred to as "ash" in the technical literature, represents about 13.5% by weight of the CBp and essentially consists of zinc sulphide mixed with silica and silicates. The latter are added to the tyre compounds together with the carbon black as "fillers" and accumulate in the CBp after the pyrolysis process. The problem of the mineral fraction in CBp concerns the fact that it is intimately trapped inside and on the surface of the CBp, consequently limiting the reinforcing effect thereof and interfering with the sulphur-based vulcanization system, if reused in new rubber compounds.

A carbonized material is, by definition, insoluble or poorly soluble in organic solvents. On the other hand, a series of organic solvents have been surprisingly found, and therefore form the object of the present invention, which are able to extract the fraction of carbonized rubber present in the CBp, leaving the CBp devoid of this fraction which limited the processability thereof in the event of grinding, thus lacking the carbonized fraction which occupied the active sites and somewhat limited the reinforcing action as measured by the surface area. Furthermore, the extraction with the solvents object of the present invention also effectively removes all the types of PAHs present in the CBp, making the CBp completely purified and ready to use as a filler for new rubber compounds, without the impediments for use instead considered with virgin CBp.

The solution according to the present invention is inserted in this context, which proposes to provide a purification process of the carbon black obtained from the pyrolysis of tyres used by means of solvent extraction characterized by low or zero toxicity and environmental impact, preferably, but not exclusively, derived from raw materials from renewable and non-fossil sources, or by means of heat treatment in an inert atmosphere followed by solvent extraction, in order to remove the pyrolysed rubber residues deposited on the surface of the black carbon obtained from the pyrolysis and the polycyclic aromatic hydrocarbons contained therein.

Furthermore, the present invention proposes to provide a process for the extraction of zinc from the carbon black obtained from the pyrolysis previously purified by means of solvent extraction or by heat treatment followed by solvent extraction, making use of carboxylic acids of natural origin, such as citric acid and tartaric acid obtained from completely renewable sources.

The object of the present invention is therefore to provide an ecological purification and reactivation process of the carbon black obtained from the pyrolysis of used tyres which allows to overcome the limits of the processes according to the prior art and to obtain the technical results previously described.

A further object of the invention is that said ecological purification and reactivation process of the carbon black obtained from the pyrolysis of used tyres can be carried out with substantially contained costs.

Not least, the object of the invention is to propose an ecological purification and reactivation process of the carbon black obtained from the pyrolysis of used tyres which is simple, safe and reliable.

Therefore, the specific object of the present invention is a purification process of the carbon black obtained from the pyrolysis of used tyres by means of extraction with a medium polarity solvent, or heat treatment in an inert atmosphere followed by extraction with medium polarity solvent, in which said medium polarity extraction solvent has a polarity between 36.5≤ET(30)≤41.6 kcal/mol on the Reichardt scale and preferably is selected from: methyltetrahydrofuran (Me-THF), tetrahydrofuran (THF), ethyl acetate (AcOEt), dimethylcarbonate (DMC), methyl acetate (AcOMe), dichloromethane (CH₂Cl₂), ethyl formate (HCO₂Et), azeotropic 3:1 vol/vol compound of ethyl acetate and ethanol (AcOEt/EtOH) and in which said heat treatment in an inert atmosphere preferably takes place at a temperature between 500°C and 750°C and more preferably at a temperature between 550°C and 600°C, as well as under a stream of an inert gas preferably selected from: N₂, Ar, CO₂, superheated vapour or a combination thereof and more preferably under a CO₂ stream, superheated vapour or a combination thereof.

Furthermore, according to the present invention, the purification process of the carbon black obtained from the pyrolysis of used tyres can further comprise a step of selective extraction of the zinc from the previously purified carbon black by solvent extraction possibly preceded by a heat treatment in an inert atmosphere, in which said step of selective zinc extraction comprises the use of an aqueous solution comprising a carboxylic acid selected from: citric acid and tartaric acid, preferably in combination with hydrofluoric acid.

### EXAMPLES 1-20

The present invention will be described below by way of non-limiting illustration with particular reference to some illustrative examples.

In the examples, the solvent extractions were performed in a Soxhlet type solid-liquid extractor *[see* L. Gattermann, Die Praxis der Organischen Chemikers, de Gruyter, (1957*)],* with 500ml extraction chamber. For each extraction batch, approximately 262g of CBp was placed in a special cellulose thimble which was in turn inserted into the Soxhlet extraction chamber. For each example reported in Table 1, the extraction was carried out in a standard time span of 8 hours, from time to time using the solvents reported in the examples 1-20 of the following Table 1. At the end of the extraction, the cellulose thimble containing the extracted CBp was removed from the Soxhlet and left to dry under a fume hood and then in a dryer, until the weight was constant. Subsequently, the dried black was removed from the cellulose thimble, if necessary gently pulverized in a mortar or using a special powder grinder and finally weighed. The weighing determined the quantity of purified CBp remaining in the thimble after extraction. The percentage by weight of the CBp recovered after extraction was deduced from the weight of the purified CBp, and therefore the percentage by weight of bituminous fraction removed. Using the method ASTM D6559-19, the surface area of CBp after solvent extraction was also determined. The virgin CBp, as such, has a surface area of 41 m²/g and only the effective solvents in the extraction of the bituminous fraction are capable of leading to a significant increase in the surface area of the CBp, which does not occur with the other ineffective solvents reported for the purposes of comparison. Examples 1 - 5 shown in Table 1 are comparative and show how some solvents, in this case a series of aliphatic and cycloaliphatic (or naphthenic) hydrocarbons such as pentane, hexane, decalin, solvent naphtha, turpentine essence and limonene are poorly effective in removing the residual bituminous fraction from the pyrolysis of the CBp and the treatment with these often has no evident effects on the surface area of the CBp.

**Table 1. CBp extraction by means of solvent. Examples 1-20**

| Example No. | SOLVENT | Solvent polarity according to Reichardt ET(30) (in kcal/mol) (*) | % CBp recovered after exhaustive extraction | Bituminous fraction of CBp extracted from the solvent (% of starting CBp) | Surface area CBp (m²/g) ASTM D6559 | Comments on the extraction effectiveness of the bituminous fraction from the CBp |
|---|---|---|---|---|---|---|
| | CBp as such | n.a. (**) | n.a. (**) | n.a. (**) | 41 | |
| 1 | Pentane | 30 | 99 | 1 | 41 | Comparative example, solvent NOT effective |
| 2 | Hexane | 31 | 98 | 2 | 41 | Comparative example, solvent NOT effective |
| 3 | Decalin | 31.2 | 98 | 2 | 41 | Comparative example, solvent NOT effective |
| 4 | Solvent naphtha (White spirit) | 32 | 98 | 2 | 41 | Comparative example, solvent NOT effective |
| 4 | Essence of turpentine (turpentine) | 32.2 | 98 | 2 | 41 | Comparative example, solvent NOT effective |
| 5 | Limonene | 32.3 | 98 | 2 | 41 | Comparative example, solvent NOT effective |
| 6 | Xylenes (mixture of isomers) | 33.1 | 91 | 9 | 58 | Comparative example, solvent NOT effective |
| 7 | Toluene | 33.9 | 91 | 9 | 61 | Comparative example, solvent NOT effective |
| 8 | Benzene | 34.3 | 90 | 10 | 64 | Comparative example, solvent NOT effective |
| 9 | Trichloroethyle ne | 35.9 | 90 | 10 | 66 | Comparative example, solvent NOT effective |
| 10 | 2-Methyl-tetrahydrofura n | 36.5 | 88 | 18 | 75 | Effective solvent |
| 11 | Tetrahydrofura n | 37.4 | 86 | 20 | 76 | Effective solvent |
| 12 | Ethyl acetate | 38.1 | 85 | 18 | 74 | Effective solvent |
| 13 | Dimethyl carbonate | 38.2 | 87 | 16 | 74 | Effective solvent |
| 14 | Methyl acetate | 38.9 | 85 | 18 | 74 | Effective solvent |
| 15 | Dichlorometha ne | 40.7 | 79 | 21 | 77 | Effective solvent |
| 16 | Ethyl formate | 40.9 | 85 | 17 | 74 | Effective solvent |
| 17 | Ethyl acetate/Ethan ol 3:1 | 41.6 | 86 | 14 | 74 | Effective solvent |
| 18 | Acetone | 42.2 | 89 | 11 | 69 | Comparative example, solvent NOT effective |
| 19 | Ethanol | 51.9 | 92 | 8 | 67 | Comparative example, solvent NOT effective |
| 20 | Water | 63.1 | 100 | o | 41 | Comparative example, solvent NOT effective |
| (*) Reichardt C. "Solvents and Solvent Effects in Organic Chemistry" 3a Ed., Table 7.3, Wiley-VCH (2003). | | | | | | |
| (**) n.a. = not applicable | | | | | | |

Therefore, it was possible to determine that naphtha, the solvent mentioned by J. Piskorz et al. in the article [Energy and Fuels vol. 13, p. 544-551 (1999*)]* appears to be completely ineffective as a solvent of the bituminous fraction of CBp, together with all the other aliphatic and cycloaliphatic solvents tested. On the other hand, certain aromatic solvents, such as xylenes in a mixture of isomers, toluene and benzene (examples 6-8 in Table 1) appear to have better extraction effects than the aliphatic and naphthenic acids, but with not entirely satisfactory results, with respect to the series of solvents object of the present invention reported in examples 10-17 of Table 1. Therefore, also the examples 6-8 of Table 1 are reported as comparative examples and show that the benzene, toluene and xylene, mentioned in US patent *[*G. W. Denison, US PAT. 2004/047779 A1*]* as carbon black extraction and purification agents, are not the best solvents suitable for this operation, being far exceeded in efficiency by the solvents identified in the present invention and object of the present invention, reported in examples 10-17 of Table 1. It has indeed been surprisingly found, and therefore forms the object of the present invention, that a series of solvents with medium polarity, measured by means of the method and the Reichardt scale and called ET(30) *[see* C. Reichardt, Solvents and Solvent Effects in Organic Chemistry. Wiley-VCH edition of (2003*) and the updated edition of (2011)]* are highly effective in the extraction of the bituminous fraction of CBp, far exceeding in efficiency both the aliphatic, cycloaliphatic, terpenic and aromatic hydrocarbons mentioned above (examples 1-8 of Table 1), and certain chlorinated compounds such as trichlorethylene, example 9 of Table 1, mentioned by Piskorz et al. *[Op.cit.]* as a possible CBp extraction solvent, even surpassing in efficiency certain highly polar solvents such as acetone and ethanol (examples 18 and 19 of Table 1), whereas acetone is already recommended by Piskorz et al. *[Op.cit.]* as a suitable solvent for the purification of CBp.

In fact, the extraction efficiency, as well as the uniqueness of the performance of the solvents object of the present invention (examples 10-17 of Table 1) are measured by the amount of bituminous fraction extracted from the CBp in the standard Soxhlet extraction time, combined with the increase in surface area measured on the purified CBp, which is not equalled and is not reflected in any of the solvents reported for comparative purposes. The extraction with the solvents object of the present invention (examples 10-17 of Table 1) involves a significant increase in the surface area of the CBp, which in examples 10-14 and 16-17 reaches 74-76 m²/g and culminates in example 15 with 77 m²/g, compared to 41 m²/g of virgin CBp. In particular, Table 1 clearly shows that the extraction efficiency of the solvents studied follows the trend of the polarity scale of the solvents proposed and measured by Reichardt, said ET(30) *[see C. Reichardt, Op.cit.]* and the maximum extraction efficiency can be identified for solvents with values of ET(30) of 36.5≤ET(30)≤41.6 kcal/mol. Therefore, the preferable solvents for the extraction of CBp and object of the present invention are those of examples 10-17 and precisely methyltetrahydrofuran (Me-THF), tetrahydrofuran (THF), ethyl acetate (AcOEt ), dimethylcarbonate (DMC), methyl acetate (AcOMe), dichloromethane (CH₂Cl₂), ethyl formate (HCO₂Et), 3:1 vol/vol azeotropic compound of ethyl acetate and ethanol (AcOEt / EtOH). It is important to underline that all the solvents object of the present invention have ecological features. In fact, Me-THF and THF are obtained from completely renewable natural sources, i.e., for example, from corn cobs, rice husks, sugar cane bagasse and other similar agricultural waste and Me-THF has an exciting toxicological and environmental profile *[see* V. Pace et al. ChemSusChem, Vol. 5, p. 1369-1379, (2012*)].* In turn, ethyl acetate, methyl acetate and ethyl formate can also be obtained from renewable sources, respectively acetic fermentation, alcoholic fermentation and aceton-butyl fermentation *[see* M. Giua, Chimica Industriale, vol. 8, p. 283-386, (1975*)]* and are easily biodegradable and therefore have almost no environmental impact. DMC has a very low toxicity and rapid biodegradability profile with a very favourable environmental impact profile *[see* F. Mizia et al. Chimica & Industria, vol. 83, p.47-54, (2001*)].* In example 15 of Table 1, it can be seen that CH₂Cl₂ is among the most efficient purification solvents of CBp and is therefore included among the solvents object of the present invention. The CH₂Cl₂ can also be obtained, at least in part, from renewable sources, such as by the chlorination of biomethane. Although there are reservations regarding the toxicity thereof, it should be emphasized that these reservations could be overcome if the CH₂Cl₂ was used in a suitably designed closed circuit system. In fact, the CH₂Cl₂ has undisputed advantages for low cost, high extraction efficiency, low boiling point (about 40°C), low evaporation enthalpy at 80.5 kcal/kg (important in the solvent recycling step) and above all the almost unique feature among the solvents tested in examples 10-17 of Table 1, of being non-flammable. From the perspective of environmental impact, dichloromethane decomposes rapidly if dispersed in the environment and has no effect on stratospheric ozone *[see* C.M. Trudinger, et al. Journal of Geophysical Research: Atmospheres, vol. 109 issue D22, (2004*)].* Table 1 also shows that the removal, by means of solvent extraction, of the pyrolysed rubber residues from the CBp surface, causes an increase in the CBp surface area measured according to the method ASTM D6559-19. A greater surface area corresponds to an increase in the reinforcing effect of the carbon black, since the active sites on the CBp surface responsible for the black-rubber interaction have become available. Therefore, the removal of the extractable fraction from the CBp involves not only the removal of the PAHs (contained in the bituminous fraction), but also an improvement of the reinforcing properties of the CBp, should it be reused as a filler in new rubber compounds.

### Comparative EXAMPLES 21-28

In these examples, the CBp is heat treated in a tube furnace under a selected gas and in any case of a chemical nature different from both air and oxygen. The heat treatment was carried out between 500°C and 750°C and preferably between 550°C and 600°C. In this temperature range the bituminous fraction of the CBp distils away and is distanced from the CBp by the flow of the selected gas and, after a suitable treatment time, shown in the examples reported in Table 2, it is completely purified and deprived of the bituminous fraction.

In the preferred embodiments thereof, a quartz tube with an internal diameter of 2 cm and 30 cm long with two male cones at the ends inserted in a Carbolite Type MTF 10/25/130 tube furnace. The quartz tube was loaded with the mass of virgin CBp to be treated, carefully arranged in the useful section of the tube covered by the furnace, as reported in Table 2, in examples 21-28. The ends of the quartz tube were closed with two taps, each of which was connected to a female cone. Between the female cone and the tap, a porous septum in sintered glass with porosity G1 was inserted, to prevent the dispersion of the CBp powder out of the reactor. Examples 21-28 of Table 2 were carried out by heating the furnace with a ramp from 20°C/min up to the chosen temperature (shown in Table 2) and this temperature was maintained for the time indicated in Table 2, before switching off the furnace and waiting for it to cool down to room temperature.

**Table 2 - Removal of the bituminous fraction of CBp by heat treatment - Examples 21-28**

| Example No. | Process gas | Mass of virgin CBp in the tube furnace (g) | Temperature (°C) x Treatment time (min) | % CBp recovered after heat treatment | Bituminous fraction of CBp removed by heat (% of starting CBp) | CBp surface area (m²/g) ASTM D6559-19 | Comments on the extraction effectiveness of the bituminous fraction from the CBp |
|---|---|---|---|---|---|---|---|
| | CBp as such | n.a. (*) | n.a. (*) | n.a. (*) | n.a. (*) | 41 | |
| 21 | Nitrogen | 2 | 550°C x 15 min | 80 | 20 | 68 | Effective treatment |
| 22 | Nitrogen | 5 | 550°C x 45 min | 82 | 18 | 67 | Effective treatment |
| 23 | Argon | 10 | 600°C x 30 min | 82 | 18 | 70 | Effective treatment |
| 24 | Carbon dioxide (CO₂) | 10 | 600°C x 60 min | 78 | 20 | 75 | Effective treatment |
| 25 | Carbon dioxide (CO₂) | 10 | 600°C x 120 min | 76 | 20 | 82 | Effective treatment |
| 26 | Carbon dioxide (CO₂) | 10 | 600°C x 180 min | 74 | 20 | 86 | Effective treatment |
| 27 | Water vapour | 10 | 600°C x 120 min | 74 | 20 | 85 | Effective treatment |
| 28 | Water vapour | 10 | 600°C x 180 min | 71 | 20 | 89 | Effective treatment |
| (*) n.a. = not applicable | | | | | | | |

During the entire heating ramp, during the maintenance of the process temperature and during the entire cooling step, the CBp was flushed inside the reaction tube with the chosen gas (flows between 0.1 and 0.5 L/min): nitrogen for examples 21-22, argon for example 23, carbon dioxide (CO₂) for examples 24-26 and finally with superheated water vapour at about 600°C for examples 27 and 28. The superheated water vapour was produced by tapping it from a special generating boiler, passing it through a copper coil heated externally with a Bunsen burner with a large flame, until it reached red heat *[See Gattermann, Op.Cit., Aut similia].* Examples 21-23 of Table 2 show that inert gases such as nitrogen and argon are able to drag away the bituminous fraction which covers the CBp, when the latter is heated to 550°C-600°C. The removal of the bituminous fraction by heat treatment in inert gas involves the increase of the surface area of the purified CBp, as already observed in the solvent extraction and summarized in Table 1. In other words, the heat treatment of CBp under N₂ or Ar has the same effects achievable by means of solvent extraction. On the other hand, as illustrated in Table 2 from examples 24-28, the treatment of CBp under a stream of carbon dioxide CO₂, under the flow of superheated vapour or a combination thereof, involves not only the complete removal of the bituminous fraction, but also a surprising increase in the surface area of the resulting CBp. It is known in the literature that this phenomenon of activation of the carbonaceous substrate occurs according to the reactions:

CO₂ + C → 2CO (1)

as well as

H₂O + C → CO + H₂ (2)

2 H₂O + C → CO₂ + H₂ (3)

but it requires much higher temperatures, i.e., between 850°C and 1000°C but allows to reach surface areas typical of activated carbons *[see* López, FA, et al. Journal of the Air & Waste Management Association, vol. 63, p. 534-544 (2013*)].* On the other hand, it has been surprisingly found, and therefore forms the object of the present invention, that it is possible to activate the CBp at only 600°C both in a CO₂ atmosphere and in that of superheated water vapour. Most likely, the impurities present in CBp in the form of zinc compounds, silica and traces of metallic iron and iron oxides allow a catalytic activation at low temperatures. On the other hand, the surface area increases of CBp in examples 24-28 compared to examples 21-23 are quite modest, but of absolute importance if the ultimate purpose of use of the CBp produced in the present patent concerns the re-use thereof in new rubber compounds for tyres, where surface areas around 100 m²/g are effective. Therefore, the heat treatment of CBp, also allows to modulate the surface area of the purified CBp at will, leaving it relatively low, by means of treatments under N₂ and Ar, for applications in tyre compounds where semi-reinforcing blacks are required and instead giving rise to real reinforcing carbon blacks up to around 90-100 m²/g with longer heat treatments, if CO₂ is used and/or superheated water vapour. In particular, the activation of CBp at 600°C under CO₂ and/or superheated water vapour is surprising and the fact that the resulting carbon blacks are intended for use in tyre compounds and not as activated carbon with very high surface areas, designed for other uses *[See Lopez et al. Op. cit.].* A confirmation of the realization of reactions (1), (2) and (3) in the corresponding examples 24-28 of Table 2, derives from the burnoff mass observed in the CBp treated at 600°C under CO₂ and which amounts to 2% in example 24, 4% in example 25 and 6% in example 26, while at 600°C under superheated water vapour the burnout mass varies from 6% to 9%, respectively in examples 27 and 28. The burnout mass is the mass of C which has been gasified by the chemical reaction of CO₂ or vapour with the CBp surface as expected from reactions (1), (2) and (3). From the foregoing it follows that, two purification processes of virgin CBp are described which are quite equivalent to each other: a solvent extraction process or a heat treatment process under inert or reactive gases. However, the heat treatment allows to modify the surface area of the resulting modified CBp, which cannot be done with the solvent process. However, it must be said that, for certain niche applications, such as, by way of example but not limited to, those of carbon blacks for rubbers and plastics which must come into contact with food and/or for cosmetic use, a sequence of processes can be proposed in which the CBp is first thermally purified and subsequently extracted with solvent, in order to remove even the last traces of PAHs, in order to offer the market of these application niches strictly clean CBp which is absolutely in line with the most stringent regulations regarding the content of residual PAHs.

The chemical analysis of a typical CBp *[see F. Cataldo, Fullerenes Nanotubes and Carbon Nanostructures, Op. Cit]* showed that zinc represents 5.5% of CBp, while the total ash which includes, in addition to zinc, also silica and silicates, represents 13.5% of CBp and finally sulphur, which is mostly in the form of zinc sulphide, represents 3.2% of the CBp. As a further part of the present invention, it has surprisingly been found that it is possible to quantitatively extract the zinc from the previously purified CBp by means of solvent extraction as illustrated in examples 10-17 reported in Table 1 or by heat treatment as per examples 21- 28 of Table 2, making use of carboxylic acids of natural origin, in this case citric acid and tartaric acid obtained from completely renewable sources and therefore with an absolutely favourable toxicological and environmental profile *[see M. Giua, Chimica Industriale, Op. Cit.].* It has indeed been surprisingly found, and is a further object of the present invention, that aqueous solutions of citric acid or aqueous solutions of tartaric acid are effective in extracting the zinc contained in the previously purified CBp by means of solvent extraction as per examples 10-17 reported in Table 1 or by heat treatment as per examples 21-28 in Table 2. Furthermore, since the zinc in CBp is mostly in the form of zinc sulphide (ZnS), the removal of zinc also automatically involves the removal of the mineral sulphur and the aqueous solutions of both citric and tartaric acids are capable of decomposing ZnS and bringing into solution Zn²⁺, which other common carboxylic acids such as acetic acid are unable to do.

### EXAMPLES 29-35

The solvent-extracted CBp, as described in any of the examples 10-17, or prepared by heat treatment as in examples 21-28, was weighed in the amount of 250 g and placed in a three-necked flask with a flat bottom, equipped with a mechanical stirrer passing through the central neck of the flask. In another neck of the flask a bubble cooler was mounted, on the top of which a tap was inserted for the outlet of the gas, which was bubbled into a large Drechsell bottle *[see Gattermann, Op.Cit.]* containing 600 ml of a 10% NaOH solution. A tube was inserted on the third neck for the introduction of a flow of compressed air (generated by a small laboratory compressor). 1000 ml of an aqueous acid solution were then added to the flask, the nature and concentration of which are specified in examples 29-37 in Table 3. Both the stirrer and the compressor were turned on. The gas which developed from the CBp essentially consists of hydrogen sulphide (H₂S), due to the decomposition of ZnS present in the CBp by the action of the acid solution. The H₂S developed was conveyed by the compressor air flow into the Drechsell bottle and absorbed by aqueous NaOH. The treatment was continued for 3 hours, heating the reaction slurry by means of an external oil bath maintained at 80°-120°C. At the end of the treatment, the CBp slurry was pump-filtered on still-hot "rapid A" filter paper. The CBp on the filter was washed abundantly with demineralized water. The filtration water was analysed for the quantitative determination of dissolved zinc, using the Hach LCK 360 spectrophotometric method. Once washed to neutrality, the CBp was left to dry in a furnace at 80°C for 12 hours under very slow stirring.

**Table 3 - Zinc removal from CBp previously extracted with solvent - Examples 29-37**

| Example No. | CBp type | Acid type | Acid molarity (mol/L) | % Ash in the CBp | % Zinc in the CBp | % Zinc extracted from the CBp | Zinc extracted g/kg CBp |
|---|---|---|---|---|---|---|---|
| n.a. | CBp as such | none | n.a. | 13.5 | 5.5 | 0 | 0 |
| n.a. | CBp extracted from examples 10-17 or 21-28 | none | n.a. | 15.7 | 6.5 | 0 | 0 |
| 29 | CBp extracted from examples 10-17 or 21-28 | Hydrochloric acid | 2.0 | 10.4 | 2.9 | 55 | 36 |
| 30 | CBp extracted from examples 10-17 or 21-28 | Hydrochloric acid | 4.0 | 7.6 | 1.1 | 83 | 54 |
| 31 | CBp extracted from examples 10-17 or 21-28 | Hydrochloric acid | 6.0 | 6.3 | 0.2 | 97 | 63 |
| 32 | CBp extracted from examples 10-17 or 21-28 | hydrochloric acid/ hydrofluoric acid | 6.0/3.0 | 0.0 | 0.1 | 98 | 64 |
| 33 | CBp extracted from examples 10-17 or 21-28 | Acetic acid | 2.5-6.0 | 13.1 | 4.7 | 27 | 18 |
| 34 | CBp extracted from examples 10-17 or 21-28 | Citric acid | 0.5-2.0 | 7.2 | 0.8 | 88 | 57 |
| 35 | CBp extracted from examples 10-17 or 21-28 | Citric acid / hydrofluoric acid | 0.5-2.0 / 3.0 | 0.5 | 0.2 | 97 | 63 |
| 36 | CBp extracted from examples 10-17 or 21-28 | Tartaric acid | 0.5-2.0 | 6.4 | 0.3 | 96 | 62 |
| 37 | CBp extracted from examples 10-17 or 21-28 | Tartaric acid / hydrofluoric acid | 0.5-2.0 / 3.0 | 0.4 | 0.1 | 98 | 64 |

The ash of the purified CBp was determined by thermogravimetric analysis in air flow.

Table 3 shows all the analytical data of examples 29-37, together with the analytical data of the CBp as such and that extracted with solvent according to examples 10-17 reported in Table 1 or by heat treatment as per examples 21-28 in Table 2. From examples 34 and 36 of Table 3 it can be deduced that both citric acid and above all tartaric acid equal 6 M hydrochloric acid in the almost complete extraction efficiency of the Zn present in the CBp, with unparalleled advantages in terms of absence of toxicity, zero environmental impact and derivation from completely renewable sources for the citric and tartaric acids.

In fact, zinc has a fair commercial value and it is believed to be advantageous to extract it from the CBp for the purpose of a complete economy of the CBp purification process. Furthermore, the removal of Zn from the CBp involves the simultaneous almost complete removal of sulphur as well, the latter being largely in the form of ZnS.

If a completely ash-free and absolutely clean CBp is to be produced, example 32 illustrates that the combination of hydrochloric/hydrofluoric acids is effective in the complete removal of the mineral fraction of the CBp. Indeed, examples 35 and 37 show that the combination of citric acid and hydrofluoric acid, as well as the combination of tartaric acid and hydrofluoric acid, are equally effective in removing the mineral fraction of the CBp.

## Claims

1. Purification process of the carbon black obtained from the pyrolysis of used tyres by means of extraction with a solvent with a polarity between 36.5≤ET(30) ≤41.6 kcal/mol on the Reichardt scale.

2. Purification process of the carbon black obtained from the pyrolysis of used tyres according to claim 1, wherein said extraction solvent is selected from: methyltetrahydrofuran (Me-THF), tetrahydrofuran (THF), ethyl acetate (AcOEt), dimethylcarbonate (DMC), methyl acetate (AcOMe), dichloromethane (CFl₂Cl₂), ethyl formate (HCO₂Et), 3:1 vol/vol azeotropic compound of ethyl acetate and ethanol (AcOEt/EtOH).

3. Purification process of the carbon black obtained from the pyrolysis of used tyres according to claim 1 or 2, wherein a heat treatment in an inert atmosphere takes place before said extraction with solvent.

4. Purification process of the carbon black obtained from the pyrolysis of used tyres according to any one of the preceding claims, further comprising a step of selective extraction of the zinc from the previously purified carbon black by means of solvent extraction or solvent extraction and heat treatment in an inert atmosphere, wherein said step of selective zinc extraction comprises the use of an aqueous solution comprising a carboxylic acid selected from: citric acid and tartaric acid.

5. Purification process of the carbon black obtained from the pyrolysis of used tyres according to claim 4, wherein said aqueous solution comprises hydrofluoric acid, in combination with said carboxylic acid selected from: citric acid and tartaric acid.

## Patentansprüche

1. Aufreinigungsverfahren des aus der Pyrolyse von Altreifen erlangten Rußes mittels Extraktion mit einem Lösungsmittel mit einer Polarität zwischen 36,5<ET(30) <41,6 kcal/Mol auf der Reichardt-Skala.

2. Aufreinigungsverfahren des aus der Pyrolyse von Altreifen erlangten Rußes nach Anspruch 1, wobei das Extraktionslösungsmittel ausgewählt ist aus: Methyltetrahydrofuran (Me-THF), Tetrahydrofuran (THF), Ethylacetat (AcOEt), Dimethylcarbonat (DMC), Methylacetat (AcOMe), Dichlormethan (CFl₂Cl₂), Ethylformiat (HCO₂Et), 3:1 Vol./Vol. azeotrope Verbindung von Ethylacetat und Ethanol (AcOEt/EtOH).

3. Aufreinigungsverfahren des aus der Pyrolyse von Altreifen erlangten Rußes nach Anspruch 1 oder 2, wobei vor der Extraktion mit Lösungsmittel eine Wärmebehandlung in einer inerten Atmosphäre erfolgt.

4. Aufreinigungsverfahren des aus der Pyrolyse von Altreifen erlangten Rußes nach einem der vorherigen Ansprüche, ferner umfassen einen Schritt selektiver Extraktion des Zinks aus dem zuvor aufgereinigten Ruß mittels Lösungsmittelextraktion oder Lösungsmittelextraktion und Wärmebehandlung in einer inerten Atmosphäre, wobei der Schritt einer selektiven Zinkextraktion die Verwendung einer wässrigen Lösung umfasst, umfassend eine Carbonsäure, die ausgewählt ist aus: Zitronensäure und Weinsäure.

5. Aufreinigungsverfahren des aus der Pyrolyse von Altreifen erlangten Rußes nach Anspruch 4, wobei die wässrige Lösung Fluorwasserstoffsäure in Kombination mit der Carbonsäure, ausgewählt aus Zitronensäure und Weinsäure, umfasst.

## Revendications

1. Procédé de purification du noir de carbone obtenu par la pyrolyse de pneus usagés par extraction avec un solvant avec une polarité entre 36,5≤ET(30) ≤41,6 kcal/mol sur l'échelle de Reichardt.

2. Procédé de purification du noir de carbone obtenu par pyrolyse de pneus usagés selon la revendication 1, dans lequel ledit solvant d'extraction est sélectionné parmi: méthyltétrahydrofurane (Me-THF), tétrahydrofurane (THF), acétate d'éthyle (AcOEt), diméthylcarbonate (DMC), méthyl acétate (AcOMe), dichlorométhane (CFI₂CI₂), formiate d'éthyle (HCO₂Et), composé azéotropique 3/1 vol/vol d'acétate d'éthyle et d'éthanol (AcOEt/EtOH).

3. Procédé de purification du noir de carbone obtenu par pyrolyse de pneus usagés selon la revendication 1 ou 2, dans lequel un traitement thermique sous atmosphère inerte a lieu avant ladite extraction avec du solvant.

4. Procédé de purification du noir de carbone obtenu par pyrolyse de pneus usagés selon l'une quelconque des revendications précédentes, comprenant en outre une étape d'extraction sélective du zinc du noir de carbone préalablement purifié par extraction au solvant ou extraction au solvant et traitement thermique dans une atmosphère inerte, dans lequel ladite étape d'extraction sélective de zinc comprend l'utilisation d'une solution aqueuse comprenant un acide carboxylique sélection: acide citrique et acide tartrique.

5. Procédé de purification du noir de carbone obtenu par pyrolyse de pneus usagés selon la revendication 4, dans lequel ladite solution aqueuse comprend de l'acide fluorhydrique, en combinaison avec ledit acide carboxylique sélectionné parmi: acide citrique et acide tartrique.
